# EUROPEAN PATENT APPLICATION

(11) **EP 4 707 077 A1**
(43) Date of publication of application: **11.03.2026**
(21) Application number: 23940554.1
(22) Date of filing: 05.06.2023
(51) Int. Cl.: B60R 19/03, B60R 19/04, B60R 19/34

(54) **SHOCK ABSORBING STRUCTURE FOR VEHICLE AND MANUFACTURING METHOD FOR SHOCK ABSORBING MEMBER FOR VEHICLE**

(71) Applicant: MAZDA MOTOR CORPORATION, Hiroshima 730-8670 (JP)
(72) Inventor: OTANI, Takahiro, Aki-gun, Hiroshima 730-8670 (JP); TANAKA, Masaaki, Aki-gun, Hiroshima 730-8670 (JP)
(74) Representative: Müller-Boré & Partner Patentanwälte PartG mbB
(86) International application number: PCT/JP2023/020761
(87) International publication number: WO 2024/252446

(57) **Abstract**

A beam member made of steel plate and extending in a vehicular width direction at an end on one side in a vehicular front-rear direction, and a crash can linearly welded to a side surface of the beam member on other side in the vehicular front-rear direction are provided. The beam member has a high strength part having a tensile strength of 980 MPa or more, and a low strength part having a tensile strength which is lower than the tensile strength of the high strength part and higher than a tensile strength of the crash can. The low strength part lies in a portion including a region welded to the crash can. The high strength part is located at least on the one side in the vehicular front-rear direction relative to the low strength part.

## Description

### Technical Field

The present disclosure relates to a shock absorbing structure for a vehicle and a method for manufacturing a shock absorber for a vehicle.

### Background Art

A vehicle is conventionally provided with a shock absorbing structure to absorb a shock at a collision. For instance, Patent Literature 1 discloses a structure including: a beam member (a bumper beam in Patent Literature 1) located in a front section of a vehicle and extending in a vehicular width direction; and a crash can (a bumper beam extension in Patent Literature 1) between the beam member and a frame member located in the rear of the beam member and extending in a vehicular front-rear direction, the crash can being configured to compressively buckle so that the crash can absorbs a shock at a collision. In the structure of Patent Literature 1, the crash can extending in the vehicular front-rear direction has a front end joined to a rear surface of the beam member by welding, and the crash can has a rear end joined to the frame member with a bolt.

The beam member desirably has a lighter weight from the perspective of a weight reduction in the vehicle. Unfortunately, a weight reduction resulting from merely reducing the thickness of the beam member may lower the tensile strength. This may consequently fail to appropriately transmit a load to the crash can at a collision of the vehicle. In other words, a shock load may not be appropriately absorbed.

### Citation List

### Patent Literature

Patent Literature 1: Japanese Unexamined Patent Publication No. 2013-121815

### Summary of Invention

The present disclosure has been accomplished in view of the circumstances described above, and has an object of providing a shock absorbing structure for a vehicle that achieves a weight reduction and enables appropriate absorption of a shock load.

A shock absorbing structure for a vehicle according to the present invention includes: a beam member made of steel plate and extending in a vehicular width direction at an end on one side in a vehicular front-rear direction; and a crash can linearly welded to a side surface of the beam member on other side in the vehicular front-rear direction. The beam member has a high strength part having a tensile strength of 980 MPa or more, and a low strength part having a tensile strength which is lower than the tensile strength of the high strength part and higher than a tensile strength of the crash can. The low strength part lies in a portion including a region welded to the crash can. The high strength part is located at least on the one side in the vehicular front-rear direction relative to the low strength part.

A method for manufacturing a shock absorber for a vehicle according to the present invention is a method for manufacturing a shock absorber including a crash can and a beam member for a vehicle. The method includes: a first preparation step of preparing the crash can extending in a predetermined direction; a second preparation step of preparing the beam member made of steel plate having a shape extending in a predetermined direction, the beam member having a high strength part having a tensile strength of 980 MPa or more and a low strength part having a tensile strength which is lower than the tensile strength of the high strength part and higher than the tensile strength of the crash can; and a welding step of linearly welding the crash can to the low strength part of the beam member. In the second preparation step, the low strength part is provided on one side in a width direction of the beam member intersecting a longitudinal direction thereof, and the high strength part is provided on other side in the width direction relative to the low strength part.

A shock absorbing structure for a vehicle and a method for manufacturing a shock absorber for a vehicle according to the present invention achieve a weight reduction and enable appropriate absorption of a shock load.

### Brief Description of Drawings

Fig. 1 is a schematic side view of a part of a vehicle body structure in a front section of a vehicle in an embodiment of the present invention.
Fig. 2 is a schematic bottom view of a part of the vehicle body structure in the front section of the vehicle.
Fig. 3 is a schematic perspective view of a second bumper beam and crash cans.
Fig. 4 is an enlarged schematic perspective view of a part of each of the second bumper beam and the crash cans.
Fig. 5 is a plan view related to Fig. 4.
Fig. 6 is a cross-sectional view taken along the line VI-VI in Fig. 5.
Fig. 7 is a flowchart for explanation of a method for manufacturing a shock absorber.

### Description of Embodiments

Hereinafter, a shock absorbing structure and a method for manufacturing the same according to an embodiment of the present invention will be described with reference to the accompanying drawings.

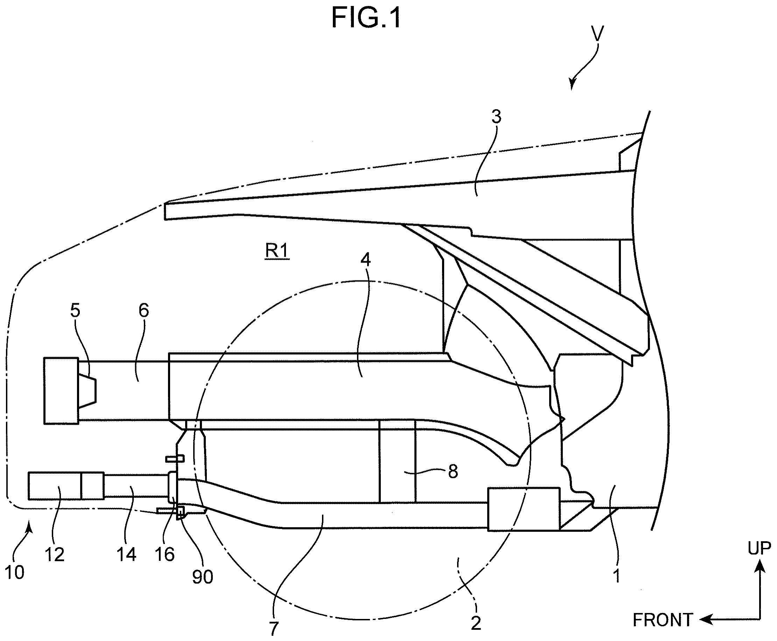

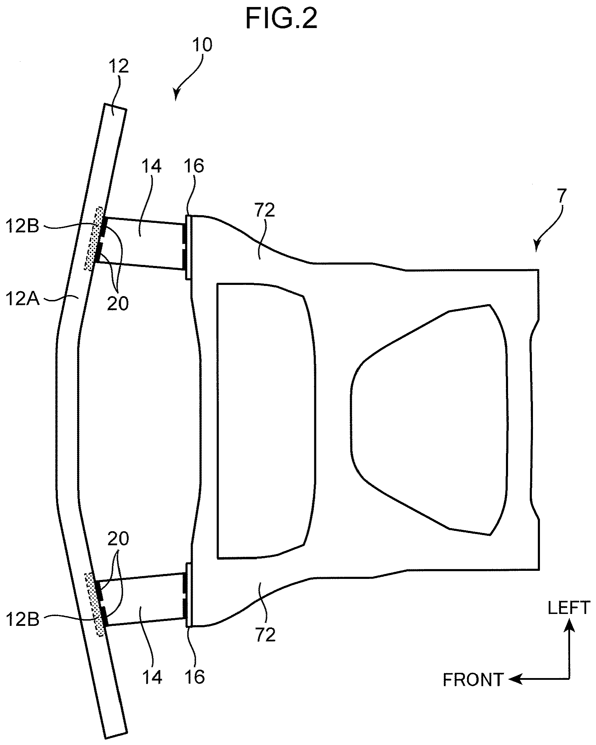

Fig. 1 is a schematic side view of a part of a vehicle body structure in a front section of a vehicle V that adopts a shock absorbing structure according to the embodiment of the present invention. Fig. 2 is a schematic bottom view of a part of the vehicle body structure in the front section of the vehicle. Hereinafter, a front-rear direction of the vehicle V is simply referred to as "front-rear direction". Besides, a vehicular width direction of the vehicle V is referred to as "left-right direction", and right and left in a state of the vehicle facing forward are simply referred to as "right" and "left" respectively. Further, each direction shown in each drawing corresponds to the direction as defined above. In the embodiment, front or forward corresponds to "one side in a vehicular front-rear direction" in the claims, and rear or rearward corresponds to "other side in the vehicular front-rear direction" in the claims.

As illustrated in Fig. 1, the front section of the vehicle V that is in front of a dash panel 1 defines an engine room R1 in which an engine or other component serving as a drive source for a wheel 2 is mounted.

In the engine room R1, vehicle body structural components including a pair of left and right upper side frames 3, a pair of left and right front side frames 4, and a subframe 7 are provided. The drawing illustrates only one or left upper side frame 3 and one or left front side frame 4. Each upper side frame 3 and each front side frame 4 extends forward from the dash panel 1. The upper side frames 3 are located around left and right ends respectively at a top of the engine room R1. Each front side frame 4 is located below corresponding one of the upper side frames 3.

The subframe 7 is a member that supports a suspension (not shown). The subframe 7 is located below the front side frames 4, that is, located in a lower section of the vehicle V. The subframe 7 includes a pair of left and right lower frames 72, 72 extending in the front-rear direction, and a member extending in the left-right direction to connect the two lower frames 72, 72 to each other. Each lower frame 72 is located below corresponding one of the front side frames 4 and is substantially parallel to the front side frame. The lower frame 72 corresponds to the "frame member" in the claims. Each lower frame 72 is located below the associated front side frame 4, and the lower frame 72, i.e., the subframe 7, is connected to and supported by the associated front side frame 4 via a mounting member 8 extending in the up-down direction.

A first bumper beam 5 and a pair of left and right first crash cans 6 are located in front of the front side frames 4.

The first bumper beam 5 is a beam member extending in the left-right direction, and is located around a front end in the engine room R1, i.e., around a front end of the vehicle V.

Each first crash can 6 is a hollow member extending in the front-rear direction. Each first crash can 6 has a posture extending in the front-rear direction between a front end surface of corresponding one of the front side frames 4 and a rear surface of the first bumper beam 5. The first crash can 6 is connected to the front end surface of the front side frame 4 in a posture of extending forward from the front end surface. Besides, the first crash can 6 is joined to the rear surface of the first bumper beam 5 in a state of abutting on the rear surface. In the embodiment, each first crash can 6 is joined to the first bumper beam 5 with a front end of the first crash can joined to the rear surface of the first bumper beam 5 by welding. The two first crash cans 6 have the same structure. Although not shown, the first crash can 6 has a substantially rectangular shape in a cross-section perpendicularly intersecting the left-right direction.

The first bumper beam 5 and the first crash cans 6 are provided to mainly reduce a shock that an occupant in the vehicle V may receive at a collision of the vehicle V. Specifically, the first bumper beam 5 receives a load from the front and transmits the load to the first crash cans 6. Each first crash can 6 compressively deforms in response to an input of the load from the first bumper beam 5, and absorbs load energy through the deformation to reduce a load which is transmitted rearward.

The vehicle V is further provided with a shock absorber 10 to absorb the shock energy at the collision of the vehicle V, in addition to the first bumper beam 5 and the first crash cans 6. The shock absorber 10 is located at a lower position at the front end of the vehicle V. The shock absorber 10 includes a second bumper beam 12 and a pair of left and right second crash cans 14. The two second crash cans 14 have the same structure.

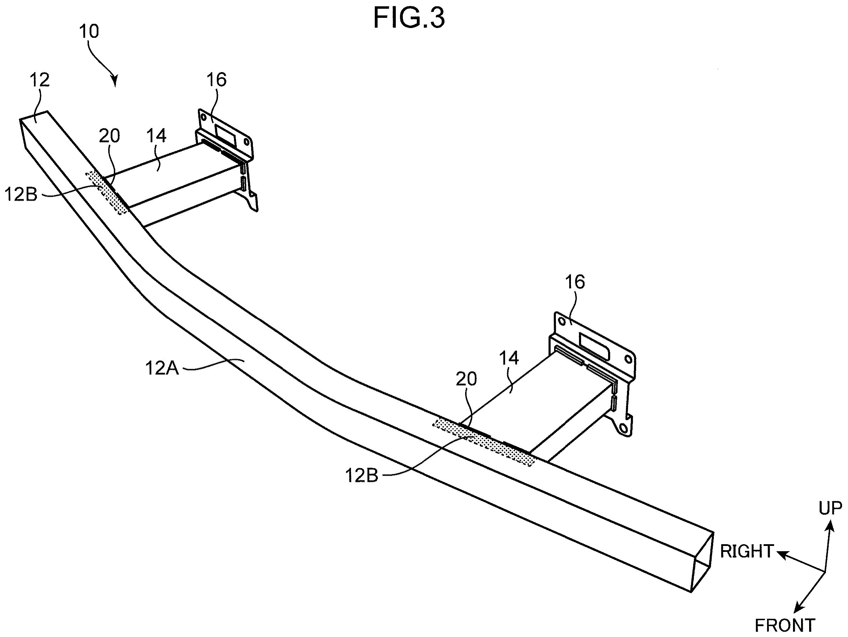

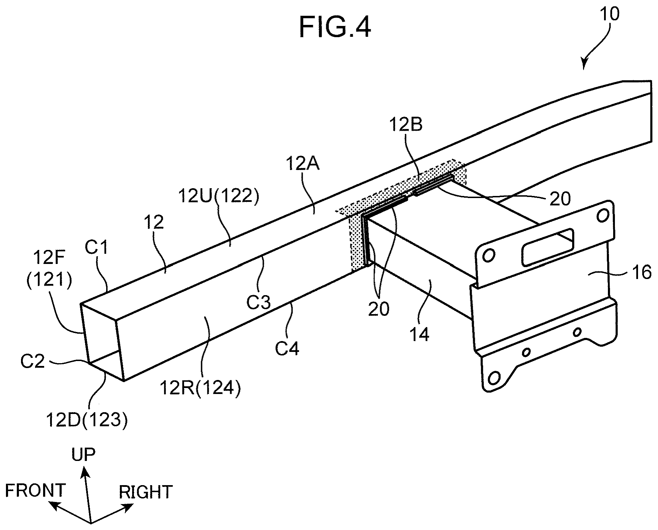

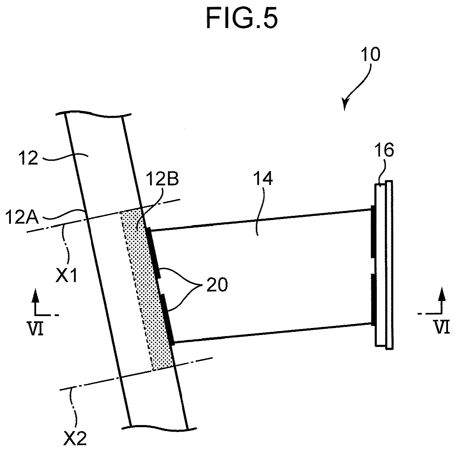

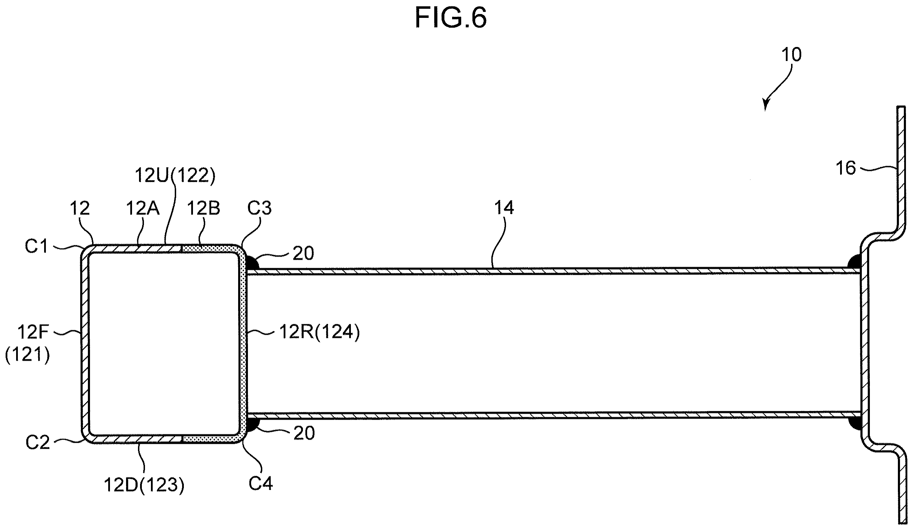

Fig. 3 is a schematic perspective view of the shock absorber 10, i.e., the second bumper beam 12 and the second crash cans 14. Fig. 4 is an enlarged schematic perspective view of a part of each of the second bumper beam 12 and the second crash cans 14. Fig. 5 is a plan view related to Fig. 4. Fig. 6 is a cross-sectional view taken along the line VI-VI in Fig. 5. The second bumper beam 12 corresponds to the "beam member" in the claims, and the second crash can 14 corresponds to the "crash can" in the claims.

The second bumper beam 12 is a beam member extending in the left-right direction, and is located below the first bumper beam 5 and is substantially parallel to the first bumper beam. In other words, the second bumper beam 12 is mounted in the vehicle V in such a manner that a longitudinal direction of the second bumper beam agrees with the left-right direction. The second bumper beam 12 is a hollow member. The second bumper beam 12 has a substantially rectangular shape in a cross-section perpendicularly intersecting the left-right direction. The second bumper beam 12 has an outer surface including: a front surface 12F extending in the left-right direction and the up-down direction; an upper surface 12U extending rearward from an upper end of the front surface 12F; a lower surface 12D extending rearward from a lower end of the front surface 12F; and a rear surface 12R extending from a rear end of the upper surface 12U to a rear end of the lower surface 12D in the up-down direction. The second bumper beam 12 further has: a first corner C1 forming a substantially right angle at an intersection of the front surface 12F and the upper surface 12U; a second corner C2 forming a substantially right angle at an intersection of the front surface 12F and the lower surface 12D; a third corner C3 forming a substantially right angle at an intersection of the rear surface 12R and the upper surface 12D; and a fourth corner C4 forming a substantially right angle at an intersection of the rear surface 12R and the lower surface 12D. The front surface 12F corresponds to the "first side surface" in the claims.

As described above, the second bumper beam 12 is a hollow member. The second bumper beam 12 includes: a front wall 121 having a plate shape extending in the left-right direction and the up-down direction; an upper wall 122 having a plate shape extending rearward from an upper end of the front wall 121; a lower wall 123 having a plate shape extending rearward from a lower end of the front wall 121; and a rear wall 124 having a plate shape extending from a rear end of the upper wall 122 to a rear end of the lower wall 123 in the up-down direction. In this manner, the front surface 12F constitutes a front surface of the front wall 121, the upper surface 12U constitutes an upper surface of the upper wall 122, the lower surface 12D constitutes a lower surface of the lower wall 123, and the rear surface 12R constitutes a rear surface of the rear wall 124.

Each second crash can 14 is a hollow member extending in the front-rear direction. The second crash can 14 has a substantially rectangular shape in a cross-section perpendicularly intersecting the front-rear direction. Each second crash can 14 is connected to a front end surface of a corresponding one of the lower frames 72 in a posture of extending forward from the front end surface. Besides, each second crash can 14 has a front end joined to the rear surface 12R of the second bumper beam 12. That is to say, each second crash can 14 has a posture extending in the front-rear direction between the front end surface of the associated lower frame 72 and the rear surface 12R of the second bumper beam 12. In the embodiment, the front end of each lower frame 72 and the front end of each front side frame 4 are at substantially the same positions in the front-rear direction, and each second crash can 14 is located below corresponding one of the first crash cans 6 and is substantially parallel to the first crash can.

Here, it is difficult to increase a dimension of each of the second bumper beam 12 and the second crash cans 14, which are located below the first bumper beam 5 and the first crash cans 6 in the lower section of the vehicle V, in the up-down direction in terms of lows and regulations concerning a minimum ground clearance for vehicles. In this respect, in the embodiment, the dimension of the second bumper beam 12 in the up-down direction has a smaller value than a dimension of the first bumper beam 5 in the up-down direction. Besides, the dimension of each second crash can 14 in the up-down direction has a smaller value than a dimension of the first bumper beam 5 in the up-down direction. In this manner, the dimension of the second crash can 14 in the up-down direction is relatively small. Instead, in the embodiment, the second crash can 14 has such a substantially rectangular parallelepiped shape that a dimension in the left-right direction is larger than the dimension in the up-down direction. Moreover, the dimension of the second crash can 14 in the up-down direction is equivalent to the dimension of the second bumper beam 12 in the up-down direction. In details, the dimension of the second crash can 14 in the up-down direction is slightly smaller than the dimension of the second bumper beam 12 in the up-down direction. This ensures a capacity of the second crash can 14 in the embodiment. Here, the definition that the dimension of the second crash can 14 in the up-down direction and the dimension of the second bumper beam 12 in the up-down direction are equivalent to each other includes such a dimension as substantially the same but slightly different, as mentioned above, without limitation to the exact matching dimension.

Each second crash can 14 is connected to the front end surface of corresponding one of the lower frames 72 in a posture of extending forward from the front end surface. The lower frames 72 are spaced from each other in the left-right direction. The two second crash cans 14 are also spaced from each other in the left-right direction. In the embodiment, the vehicle V is provided with a pair of left and right brackets 16 to respectively connect the second crash cans 14 and the lower frames 72 to each other. Each bracket 16 is a plate-shaped member having a hat shape in a view in the left-right direction. Each bracket 16 has a front end surface joined to a rear surface 12R of the associated second crash can 14 by welding. Each bracket 16 is connected to the front end surface of the associated lower frame 72 with a bolt, and the associated second crash can 14 and the lower frame 72 are connected to each other via the bracket 16.

Each second crash can 14 is connected to the rear surface 12R of the second bumper beam 12 in a state of abutting on the rear surface. In the embodiment, each second crash can 14 is joined to the second bumper beam 12 with a front end of the second crash can linearly welded to the rear surface 12R of the second bumper beam 12. Specifically, a front end surface of the second crash can 14 and the rear surface 12R of the second bumper beam 12 that is in contact with the front end surface are continuously fusion-welded along a periphery of the front end surface of the second crash can 14. The reference numeral "20" in Fig. 2 and other drawings denotes a weld. As illustrated in Fig. 2, Fig. 4, and other drawings, in the embodiment, four portions of an upper right portion, a lower right portion, an upper left portion, and a lower left portion of the front end surface of each second crash can 14 are continuously welded with a slight gap between the adjacent portions. A specific way of welding each second crash can 14 and the second bumper beam 12 together is not particularly limited. For instance, the second crash can 14 and the second bumper beam 12 are joined to each other by laser welding. Arc welding may be employed in place of the laser welding.

Next, a characteristic configuration of the shock absorbing structure according to the embodiment in relation to joining of the second bumper beam 12 and the second crash cans 14 will be described in detail.

The second bumper beam 12 is made of steel plate. The second bumper beam 12 has a high strength part 12A having a high tensile strength, and a low strength part 12B having a tensile strength which is lower than the tensile strength of the high strength part 12A. The high strength part 12A has a tensile strength of 980 MPa or more, and the high strength part 12A is made of, so called, ultra-high tensile steel plate. The tensile strength of the low strength part 12B is lower than the tensile strength of the high strength part 12A as described above. However, the tensile strength of the low strength part 12B has a higher value than a tensile strength of each second crash can 14. In other words, a relation among the tensile strength of the high strength part 12A of the second bumper beam 12, the tensile strength of the low strength part 12B thereof, and the tensile strength of each second crash can 14 is expressed as "the high strength part 12A > the low strength part 12B > the second crash can 14".

In the embodiment, the tensile strength of each part is set so that a difference between the tensile strength of the high strength part 12A and the tensile strength of the low strength part 12B is twice or more than twice as large as a difference between the tensile strength of the low strength part 12B and the tensile strength of each second crash can 14. Besides, the tensile strengths are set so that the difference between the tensile strength of the low strength part 12B and the tensile strength of the second crash can 14 is 300 MPa or more and 400 MPa or less. Specifically, in the embodiment, the tensile strength of the high strength part 12A is set to approximately 1,800 MPa, the tensile strength of the low strength part 12B is set to approximately 800 MPa, and the tensile strength of the second crash can 14 is set to approximately 500 MPa.

The second bumper beam 12 has a pair of left and right low strength parts 12B. The two low strength parts 12B respectively face the two second crash cans 14 and are spaced from each other in the left-right direction.

Each low strength part 12B lies in a rear region of the second bumper beam 12 so that the high strength part 12A is in front of the low strength part. Besides, each low strength part 12B lies in: a region of the second bumper beam 12 including a portion, i.e., a weld 20, of the associated second crash can 14 and the second bumper beam 12 welded together, the region overlapping the second crash can 14 in a front view in the front-rear direction; and a region therearound. In other words, the second crash can 14 is welded to the second bumper beam 12 at an inner position of the portion of the second bumper beam 12 that constitutes the low strength part 12B.

The left low strength part 12B will be described in detail. As illustrated in Fig. 5, a plane perpendicularly intersecting an axial direction of a portion of the second bumper beam 12 that faces the associated second crash can 14 and passing a slightly right position of a right edge of the second crash can 14 is defined as a first imaginary plane X1, and a plane passing a slightly left position of a left edge of the second crash can 14 and being parallel to the first imaginary plane X1 is defined as a second imaginary plane X2. The low strength part 12B lies in a region of the rear wall 124 of the second bumper beam 12 between the first imaginary plane X1 and the second imaginary plane X2, a region of the upper wall 122 from the substantially center to the rear in the front-rear direction and between the first imaginary plane X1 and the second imaginary plane X2, and a region of the upper wall 122 from the substantially center to the rear in the front-rear direction and between the first imaginary plane X1 and the second imaginary plane X2.

The high strength part 12A occupies all the remaining portion of the second bumper beam 12 except the low strength parts 12B. Specifically, in a portion of the second bumper beam 12 facing each second crash can 14, the high strength part 12A lies in a region in front of each low strength part 12B, the region including: an entirety of the front wall 121 of the second bumper beam 12 in the up-down direction; a portion of the upper wall 122 from the substantially center to the front in the front-rear direction; a portion of the lower wall 123 from the substantially center to the front in the front-rear direction; the first corner C1; and the second corner C2.

In the embodiment, the high strength part 12A is located away from the portion, i.e., the weld 20, of the second bumper beam 12 and the associated second crash can 14 welded together, at a separation distance of 20 mm or longer. In other words, the separation distance between a boundary of each low strength part 12B and the high strength part 12A, and the weld 20 reaches 20 mm or longer.

### Method for manufacturing a shock absorber

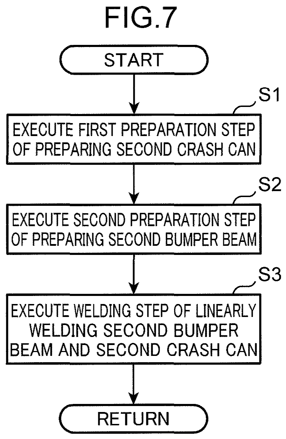

Next, a method for manufacturing a shock absorber 10 will be described with reference to Fig. 7. Fig. 7 is a flowchart for explanation of the method for manufacturing the shock absorber 10.

First, a first preparation step of preparing a second crash can 14 having the above-described configuration is executed (step S1). In the embodiment, in the first preparation step, a pair of second crash cans 14 are manufactured from steel material so as to each be a hollow member having a substantially rectangular parallelepiped shape extending in a predetermined direction as described above. In the first preparation step, each second crash can 14 is manufactured to have a tensile strength of approximately 500 MPa.

Next, a second preparation step of preparing a second bumper beam 12 having the above-described configuration is executed (step S2). In the embodiment, in the second preparation step, the second bumper beam 12 is manufactured from steel material so as to have a substantially square shape in a hollow cross-section and extend in a predetermined direction. At this time, the second bumper beam 12 is given a high strength part 12A having the above-described configuration that the high strength part 12A has a tensile strength of 980 MPa or more, and a pair of low strength parts 12B each having the above-described configuration.

Specifically, each low strength part 12B having a tensile strength which is lower than the tensile strength of the high strength part 12A and higher than a tensile strength of corresponding one of the second crash cans 14 is provided in a portion of the second bumper beam 12 that faces the second crash can 14 on one side in a width direction of the second bumper beam 12 intersecting a longitudinal direction thereof, that constitutes a rear region of the second bumper beam 12 in a state where the second bumper beam 12 is mounted in the vehicle V, and that includes a region to be welded to the second crash can 14. Besides, the high strength part 12A having the higher tensile strength than each low strength part 12B is provided in another portion of the second bumper beam 12. At this time, the high strength part 12A is provided in a portion on other side in the width direction of the second bumper beam 12, the portion being opposite to the second crash can 14, that is, provided in a front portion of a portion facing the second crash can 14 in the state where the second bumper beam 12 is mounted in the vehicle V. For instance, a beam member to be the second bumper beam 12 is made of steel material for hot-forming, the temperature of the beam member is risen, and thereafter, a portion to be the high strength part 12A is rapidly cooled and another portion to be each low strength part 12B is kept at a high temperature. This leads to manufacture of the second bumper beam 12 having each low strength part 12B and the high strength part 12A. It is noted here that the "width direction" agrees with the front-rear direction in the state where the second bumper beam 12 is mounted in the vehicle V, and corresponds to the "width direction" in the claims. Besides, the rear in the state where the second bumper beam 12 is mounted in the vehicle V corresponds to "one side in the width direction", and the front in this state corresponds to "other side in the width direction".

Subsequently, a welding step of welding the second bumper beam 12 and the two second crash cans 14 together is executed (step S3). In the welding step, each second crash can 14 is welded to a side surface of the second bumper beam 12 (i.e., the rear surface 12R of the second bumper beam 12 in the state where the second bumper beam 12 is mounted in the vehicle V) on the one side in the width direction thereof in a posture of extending from the side surface of the second bumper beam 12 on the one side in the width direction thereof toward the one side (i.e., rearward in the state where the second bumper beam 12 and the second crash can 14 are mounted in the vehicle V) in the width direction. In the welding step, each second crash can 14 is made to abut on the associated low strength part 12B of the second bumper beam 12, and a boundary of the crash can and the low strength part is linearly welded. This leads to manufacture of the shock absorber 10 including the second bumper beam 12 and the two second crash cans 14 welded to the second bumper beam.

### Operational effects

As described heretofore, a vehicle V in the embodiment is provided with a second bumper beam 12 made of steel plate and a second crash can 14 linearly welded to a rear surface 12R of the second bumper beam 12 and having a shape extending rearward from the rear surface 12R of the second bumper beam 12, at a front end and in a lower section of the vehicle V. The second crash can 14 is connected to a subframe 7. This configuration transmits a load or shock load, which has been applied to the front end and the lower section of the vehicle V at a collision of the vehicle, from the second bumper beam 12 to the second crash can 14 and compressively deforms the second crash can 14 to enable the second crash can 14 to absorb shock energy. The configuration thus achieves suppression of transmission of the shock load toward a vehicle compartment via the subframe 7.

In the embodiment, the second bumper beam 12 has a high strength part 12A having a tensile strength of 980 MPa or more, and a low strength part 12B having a tensile strength which is lower than the tensile strength of the high strength part and higher than a tensile strength of the second crash can 14, the second bumper beam having a high tensile strength as a whole. This ensures the tensile strength of the second bumper beam 12 even if the second bumper beam is thin, and hence achieves a weight reduction while keeping the tensile strength of the second bumper beam 12.

In particular, in the embodiment, the low strength part 12B lies only in a rear portion of the bumper beam that faces the second crash can 14, and the high strength part 12A occupies the remaining large portion of the second bumper beam 12. This configuration allows the second bumper beam 12 to have a much higher tensile strength or to be thinner while ensuring the tensile strength.

The low strength part further lies in a portion including a region welded to the second crash can 14. This enables appropriate transmission of the load from the second bumper beam 12 to the second crash can 14.

Specifically, in a case of welding steel plate having a high tensile strength, so-called HAZ softening that a portion of the steel plate around a weld is softened due to heat entering at the welding may occur and a tensile strength of the portion around the weld may be significantly lowered. Besides, a softening level of the steel plate is not always uniform, and hence, the portion around the weld may have a low tensile strength locally. Moreover, an amount of such lowering of the strength is larger as an original tensile strength is higher. From this perspective, welding steel plate having an extremely high tensile strength is likely to make a certain portion have a much lower tensile strength locally around the weld than another portion. In this state, if the whole of the second bumper beam 12 is configured to have a tensile strength of 980 MPa or more and the second crash can 14 is linearly welded to the second bumper beam, the portion around the weld 20 of the second bumper beam 12 and the second crash can 14 is likely to locally have an extremely low tensile strength. Therefore, adoption of this configuration in which the whole of the second bumper beam 12 has the tensile strength of 980 MPa is deduced to hinder the second bumper beam 12 from appropriately shifting or deforming at a collision of the vehicle, or may lead to a failure at appropriately transmitting the shock load to the crash can.

In contrast, in the embodiment, the low strength part 12B having the tensile strength which is lower than the tensile strength of the high strength part 12A lies in a portion of the second bumper beam 12 including a region welded to the second crash can 14, and the second crash can 14 is welded at the low strength part 12B. This configuration achieves a smaller amount of lowering of the strength around the weld 20 at welding, and allows the portion around the weld 20 of the second bumper beam 12 and the second crash can 14 to avoid locally having an extremely low tensile strength. This allows the second bumper beam 12 to appropriately deform or shift at a collision of the vehicle V, and enables appropriate transmission of the shock load from the second bumper beam 12 to the second crash can 14. The embodiment consequently enables the crash can to absorb shock energy.

In particular, in the embodiment, a difference between the tensile strength of the high strength part 12A and the tensile strength of the low strength part 12B is twice or more than twice as large as a difference between the tensile strength of the low strength part 12B and the tensile strength of the second crash can 14, and the tensile strength of the low strength part 12B is kept satisfactorily low while the tensile strength of the high strength part 12A is kept high. The embodiment thus reliably provides the above-described effects.

Moreover, the embodiment with the smaller difference between the tensile strength of the low strength part 12B and the tensile strength of the second crash can 14, i.e., the smaller difference between the strengths of respective two portions welded together, enables appropriate welding of the second bumper beam 12 and the second crash can 14 together while avoiding hot cracking at the welding.

It is seen that an influence of heat entering accompanied by the linear welding is small in a location away from the weld 20 at a distance of 20 mm or longer. In this respect, in the embodiment, the high strength part 12A is located away from the weld 20 at a distance of 20 mm or longer. This configuration prevents significant lowering of the strength in the high strength part 12A or significant lowering of the strength around the weld 20 by suppressing an influence of the heat applied at the welding on the high strength part 12A located around the weld 20.

Furthermore, in the embodiment, the high strength part 12A is in front of the low strength part 12B and opposite the second crash can 14. That is to say, the strength of the portion welded to the second crash can 14 is kept low, and the strength of the portion in front of the second crash can 14 is ensured. This configuration enables appropriate transmission of the shock load applied to the second bumper beam 12 to the second crash can 14 by suppressing deformation of the portion in front of the second crash can 14, and enables the crash can to reliably absorb the shock energy.

In particular, in the embodiment, the high strength part 12A is located in a region including the first corner C1 and the second corner C2 at the front of the second bumper beam 12. The configuration allows the portion including the corners C1, C2 to reliably receive a load at a collision of the vehicle and enables more appropriate transmission of the shock load to the second crash can 14 via the portion.

In the embodiment, a dimension of the second crash can 14 in the up-down direction and a dimension of the second bumper beam 12 in the up-down direction are equivalent to each other. This configuration allows the second crash can 14 to avoid having a too small capacity or the crash can 14 and the second bumper beam 12 to avoid having a too small welding area, and achieves prevention of decrease in performance of transmitting the load from the second bumper beam 12 to the second crash can 14 even in arrangement of the second crash can 14 at a position in the lower section of the vehicle V where it is difficult to increase the dimension of the second crash can 14 in the up-down direction. The too small welding area as mentioned above may cause lowering of the strength around the weld to easily affect the performance of transmitting the shock load from the second bumper beam 12 to the second crash can 14. In contrast, the embodiment adopts, for the weld of the second crash can 14 and the second bumper beam 12, the above described configuration in which the second bumper beam 12 has the high strength part 12A and the low strength part 12B, and the second crash can 14 is welded at the low strength part 12B. This configuration hence achieves effective and preferable performance of transmitting the shock load to the second crash can 14.

In addition, a manufacturing method according to the embodiment includes linearly welding a second bumper beam 12 having a high strength part 12A and a low strength part 12B, and a second crash can 14 together at the low strength part 12B. This achieves a weight reduction, and accomplishes manufacture of a shock absorber 10 that enables appropriate transmission of a shock load from the second bumper beam 12 to a second crash can 14 and that enables the second crash can 14 to appropriately absorb shock energy.

### Modifications

Although the configuration in which the difference between the tensile strength of the high strength part 12A and the tensile strength of the low strength part 12B is twice or more than twice as large as the difference between the tensile strength of the low strength part 12B and the tensile strength of the second crash can 14 is described in the embodiment, the relation between the tensile strengths is not limited thereto. A relation that the tensile strength of the low strength part 12B is lower than the tensile strength of the high strength part 12A and higher than the tensile strength of the second crash can 14 may be satisfied.

It is noted here that such a larger difference between the tensile strength of the high strength part 12A and the tensile strength of the low strength part 12B than the difference between the tensile strength of the low strength part 12B and the tensile strength of the second crash can 14 reliably allows the high strength part to keep the high tensile strength and allows the low strength part to keep the low tensile strength. Moreover, as shown in the embodiment, making the difference between the tensile strength of the high strength part 12A and the tensile strength of the low strength part 12B be twice or more than twice as large as the difference between the tensile strength of the low strength part 12B and the tensile strength of the second crash can 14 further reliably allows the high strength part to keep the high tensile strength and allows the low strength part to keep the low tensile strength, and more reliably accomplishes transmission of the shock load from the second bumper beam 12 to the second crash can 14 while ensuring the tensile strength of the second bumper beam 12. Similarly, the difference between the tensile strength of the low strength part 12B and the tensile strength of the second crash can is not limited to a value of 300 MPa or more and 400 MPa or less.

Although the configuration in which the high strength part 12A is located away from the weld 20 at a distance of 20 mm or longer is described in the embodiment, the separation distance may be shorter than 20 mm. It is noted here that such a location of the high strength part 12A away from the weld 20 at a distance of 20 mm or longer reliably prevents significant lowering of the strength of the high strength part 12A due to heat entering accompanied by welding described above.

Although the configuration in which the second bumper beam 12 and the second crash can 14 are provided at the front end of the vehicle V is described above in the embodiment, the second bumper beam and the second crash can may be provided at a rear end of the vehicle V. In this configuration, the second crash can 14 may extend forward from a front surface of the second bumper beam 12. In this configuration, the rear corresponds to "one side in the vehicular front-rear direction" in the claims, and the front corresponds to the "other side in the vehicular front-rear direction" in the claims.

Although the configuration including the second bumper beam 12 having the high strength part 12A and the low strength part 12B is described in the embodiment, the first bumper beam 5 may have a high strength part and a low strength part and the first crash can 6 may be welded to the low strength part. Specifically, the shock absorber 10 in the embodiment may be arranged in the upper section of the vehicle V without limitation to the lower section of the vehicle V. Alternatively, the first bumper beam 5 and the first crash can 6 may be excluded. In other words, the above-described configuration may be applied to a vehicle in which a single bumper beam is mounted at a front end or a rear end of the vehicle, and the single bumper beam may have a high strength part and a low strength part and a crash can may be welded to the low strength part.

### Conclusion

The embodiment and the modifications include the disclosure to be described below.

A shock absorbing structure for a vehicle according to an aspect of the present disclosure includes: a beam member made of steel plate and extending in a vehicular width direction at an end on one side in a vehicular front-rear direction; and a crash can linearly welded to a side surface of the beam member on other side in the vehicular front-rear direction. The beam member has a high strength part having a tensile strength of 980 MPa or more, and a low strength part having a tensile strength which is lower than the tensile strength of the high strength part and higher than a tensile strength of the crash can. The low strength part lies in a portion including a region welded to the crash can. The high strength part is located at least on the one side in the vehicular front-rear direction relative to the low strength part.

In this configuration, the tensile strength of the high strength part of the beam member has a high value of 980 MPa or more, and the tensile strength of the low strength part has a higher value than the tensile strength of the crash can. This configuration thus achieves a weight reduction in the beam member by reducing the thickness of the beam member while keeping the strength of the beam member.

Here, in a case of welding steel plate having a high tensile strength, so-called HAZ softening that a portion of the steel plate around a weld is softened due to heat entering at the welding may occur and a tensile strength of the portion around the weld may be significantly lowered. Besides, a softening level of the steel plate is not always uniform, and hence, the portion around the weld may have a low tensile strength locally. Moreover, an amount of such lowering of the tensile strength is larger as an original tensile strength of steel plate to be welded is higher. From this perspective, welding steel plate having an extremely high tensile strength is likely to make a certain portion have a much lower tensile strength locally around the weld than another portion. In this state, if the whole of the beam member is configured to have a tensile strength of 980 MPa or more and the crash can is linearly welded to the beam member, the portion around the weld of the beam member and the crash can may locally have an extremely low tensile strength. Hence, the beam member may not appropriately shift or deform at a collision of the vehicle, and a shock load may not be appropriately transmitted to the crash can.

In contrast, in the configuration, the low strength part having the tensile strength which is lower than the tensile strength of the high strength part lies in a portion including a region welded to the crash can. This achieves suppression of lowering of the strength around the weld. Specifically, the configuration prevents the portion around the weld of the beam member and the crash can from locally having an extremely low tensile strength, and enables appropriate transmission of the shock load to the crash can. Moreover, the location of the high strength part on the one side in the vehicular front-rear direction relative to the low strength part, i.e., the location of the high strength part opposite the crash can, enables appropriate transmission of the shock load from the high strength part to the low strength part. This consequently enables the crash can to absorb shock energy.

In the configuration, preferably, a difference between the tensile strength of the high strength part and the tensile strength of the low strength part is larger than a difference between the tensile strength of the low strength part and the tensile strength of the crash can. Specifically, the difference between the tensile strength of the high strength part and the tensile strength of the low strength part is twice or more than twice as large as the difference between the tensile strength of the low strength part and the tensile strength of the crash can.

This configuration allows the difference between the tensile strength of the low strength part and the tensile strength of the crash can to be relatively small while allowing the high strength part to have a satisfactorily high tensile strength. The configuration thus reliably suppresses lowering of the strength of the beam member at the weld to the crash can while ensuring the tensile strength of the beam member, and enables appropriate transmission of the shock load.

The difference between the tensile strength of the low strength part and the tensile strength of the crash can may have a value of 300 MPa or more and 400 MPa or less.

In the configuration, preferably, the high strength part is located away from a weld of the crash can and the beam member at a distance of 20 mm or longer.

This configuration achieves suppression of an influence of heat applied at the welding on the high strength part around the weld, and suppression of significant lowering of the tensile strength around the weld.

In the configuration, preferably, the beam member has a portion facing the crash can and having: a first side surface extending in an up-down direction and constituting a surface of the beam member on the one side in the vehicular front-rear direction; an upper surface extending from an upper end of the first side surface toward the other side in the vehicular front-rear direction; a lower surface extending from a lower end of the first side surface toward the other side in the vehicular front-rear direction; a first corner at an intersection of the first side surface and the upper surface; and a second corner at an intersection of the first side surface and the lower surface. The high strength part is located in a region including the first corner and the second corner.

This configuration allows the portion of the beam member that faces the crash can to more reliably receive the load at the collision, and thus enables reliable transmission of the load to the crash can via the portion.

In the configuration, preferably, the crash can is connected to an end surface of a frame member on the one side in the vehicular front-rear direction in a posture of extending from the end surface toward the one side in the vehicular front-rear direction, the frame member being located in a lower section of the vehicle and extending in the front-rear direction.

This configuration enables the crash can to reduce a shock load which is transmitted to the frame member located in the lower section of the vehicle.

In such a configuration including a crash can and a beam member in a lower section of a vehicle, a dimension of each of the crash can and the beam member in the up-down direction or an area of a welding region of the crash can and the beam member is likely to be small in terms of lows and regulations concerning a minimum ground clearance for vehicles. The too small area of the welding region of the crash can and the beam member may cause lowering of the strength around the weld to easily affect the performance of transmitting a shock load from the beam member to the crash can. In contrast, the aforementioned configuration appropriately transmits the shock load from the beam member to the crash can as described above. Hence, applying this configuration to the configuration including the crash can connected to an end surface of a frame member, which is located in the lower section of the vehicle and extends in the front-rear direction, on the one side in the vehicular front-rear direction in a posture of extending from the end surface toward the one side in the vehicular front-rear direction leads to achievement in effective and preferable performance of transmitting the shock load from the beam member to the crash can.

In the configuration, preferably, a dimension of the crash can in an up-down direction and a dimension of the beam member in the up-down direction are equivalent to each other.

This configuration achieves arrangement of the crash can and the beam member in the lower section of the vehicle, and allows the welding region of the crash can and the beam member to have a larger area.

A method for manufacturing a shock absorber for a vehicle according to another aspect of the present disclosure is a method for manufacturing a shock absorber including a crash can and a beam member for a vehicle. The method includes: a first preparation step of preparing the crash can extending in a predetermined direction; a second preparation step of preparing the beam member made of steel plate having a shape extending in a predetermined direction, the beam member having a high strength part having a tensile strength of 980 MPa or more and a low strength part having a tensile strength which is lower than the tensile strength of the high strength part and higher than a tensile strength of the crash can; and a welding step of linearly welding the crash can to the low strength part of the beam member. In the second preparation step, the low strength part is provided on one side in a width direction of the beam member intersecting a longitudinal direction thereof, and the high strength part is provided on other side in the width direction relative to the low strength part.

This method achieves a weight reduction, and accomplishes manufacture of the shock absorber that enables appropriate transmission of a shock load from the beam member to the crash can and that enables the crash can to appropriately absorb shock energy.

## Claims

1. A shock absorbing structure for a vehicle, comprising:
a beam member made of steel plate and extending in a vehicular width direction at an end on one side in a vehicular front-rear direction; and
a crash can linearly welded to a side surface of the beam member on other side in the vehicular front-rear direction, wherein
the beam member has a high strength part having a tensile strength of 980 MPa or more, and a low strength part having a tensile strength which is lower than the tensile strength of the high strength part and higher than a tensile strength of the crash can,
the low strength part lies in a portion including a region welded to the crash can, and
the high strength part is located at least on the one side in the vehicular front-rear direction relative to the low strength part.

2. The shock absorbing structure for a vehicle according to claim 1, wherein
a difference between the tensile strength of the high strength part and the tensile strength of the low strength part is larger than a difference between the tensile strength of the low strength part and the tensile strength of the crash can.

3. The shock absorbing structure for a vehicle according to claim 2, wherein
the difference between the tensile strength of the high strength part and the tensile strength of the low strength part is twice or more than twice as large as the difference between the tensile strength of the low strength part and the tensile strength of the crash can.

4. The shock absorbing structure for a vehicle according to claim 1, wherein
a difference between the tensile strength of the low strength part and the tensile strength of the crash can is 300 MPa or more and 400 MPa or less.

5. The shock absorbing structure for a vehicle according to claim 1, wherein
the high strength part is located away from a weld of the crash can and the beam member at a distance of 20 mm or longer.

6. The shock absorbing structure for a vehicle according to claim 1, wherein
the beam member has a portion facing the crash can and having: a first side surface extending in an up-down direction and constituting a surface of the beam member on the one side in the vehicular front-rear direction; an upper surface extending from an upper end of the first side surface toward the other side in the vehicular front-rear direction; a lower surface extending from a lower end of the first side surface toward the other side in the vehicular front-rear direction; a first corner at an intersection of the first side surface and the upper surface; and a second corner at an intersection of the first side surface and the lower surface, and
the high strength part is located in a region including the first corner and the second corner.

7. The shock absorbing structure for a vehicle according to claim 1, wherein
the crash can is connected to an end surface of a frame member on the one side in the vehicular front-rear direction in a posture of extending from the end surface toward the one side in the vehicular front-rear direction, the frame member being located in a lower section of the vehicle and extending in the front-rear direction.

8. The shock absorbing structure for a vehicle according to claim 7, wherein
a dimension of the crash can in an up-down direction and a dimension of the beam member in the up-down direction are equivalent to each other.

9. A method for manufacturing a shock absorber including a crash can and a beam member for a vehicle, comprising:
a first preparation step of preparing the crash can extending in a predetermined direction;
a second preparation step of preparing the beam member made of steel plate having a shape extending in a predetermined direction, the beam member having a high strength part having a tensile strength of 980 MPa or more and a low strength part having a tensile strength which is lower than the tensile strength of the high strength part and higher than a tensile strength of the crash can; and
a welding step of linearly welding the crash can to the low strength part of the beam member, wherein
in the second preparation step, the low strength part is provided on one side in a width direction of the beam member intersecting a longitudinal direction thereof, and the high strength part is provided on other side in the width direction relative to the low strength part.
